# EUROPEAN PATENT SPECIFICATION

(11) **EP 1 573 532 B1**
(45) Date of publication and mention of the grant of the patent: **24.06.2015**
(21) Application number: 03731480.4
(22) Date of filing: 30.05.2003
(51) Int. Cl.: G06F 9/48, G06F 9/38

(54) **ARCHITECTURE TO SUPPORT MULTIPLE CONCURRENT EXECUTION CONTEXTS ON A PROCESSOR**
ARCHITEKTUR ZUR UNTERSTÜZUNG VON MEHREREN GLEICHZEITIGEN VERARBEITUNGSKONTEXTEN AUF EINEM PROZESSOR
ARCHITECTURE PERMETTANT DE PRENDRE EN CHARGE DE MULTIPLES CONTEXTES D'EXECUTION EN SIMULTANEE SUR UN PROCESSEUR

(30) Priority: 03.06.2002 US 162428
(43) Date of publication of application: 14.09.2005
(73) Proprietor: Intel Corporation, Santa Clara, CA 95052 (US)
(72) Inventor: MORROW, Michael, W., Chandler, AZ 85246 (US); O'CONNOR, Dennis, Chandler, AZ 85249 (US); STRAZDUS, Steve, Chandler, AZ 85226 (US)
(74) Representative: Dunlop, Hugh Christopher
(86) International application number: PCT/US2003/017221
(87) International publication number: WO 2003/102773

(56) References cited:
- WO-A-99/21089
- US-A- 5 669 002
- US-A- 5 968 157

## Description

### BACKGROUND

This description relates to concurrent control and support of multiple hardware contexts. The behavioral representation of a computer to software running on that computer is called the instruction set architecture. The instruction set architecture includes both that part of the state of the computer that is visible to programs executing on the computer, known as the architecturally-visible state, and the operations that change that state, the latter being primarily the instructions that the computer executes. The architecturally-visible state is roughly divisible into two sets: the state that is primarily used to configure the computer and is normally only of concern to operating systems, and the state used by application software executing on the computer. Further, within this latter state there is a subset, referred to as a context, that each application running on the computer can assume is dedicated to exclusive use by the application. The context includes an indication, referred to as the program counter, of which instruction is to be issued next.

Typically, the central processing unit (CPU) of a computer only implements one context. Accordingly, on a typical computer, only one program is able to issue instructions at a time. In order to support having several programs apparently running simultaneously, an operating system typically runs each program for a short period of time called a time slice (usually a few milliseconds), halts the execution of that program, saves the context of that program to a storage location outside the CPU, loads the context of another program into the CPU, begins running the new program until the time slice for the new program expires, and then repeats the process. This is known as multi-tasking.

More than one context may be implemented within the CPU of a computer. This allows the hardware to issue instructions from more than one program without intervention by the operating system, and without saving and restoring program contexts in storage locations outside the CPU. Execution of the instructions associated with each context is essentially independent and has no direct effect on the execution of instructions from any other context, except through shared resources. This capability of a single CPU to hold and execute from multiple contexts without operating system intervention has become known as hardware multi-threading. The name is based on referring to each context implemented by the CPU as a thread.

Hardware multi-threading may be used to make use of very short times of inactivity in the CPU, to mitigate the effects of operations that take a long time to complete (i.e., that have a long latency), or to increase the number of instructions issued in a single clock cycle. Hardware multi-threading also may be used when an application being run on a computer maps more naturally into several tasks executing essentially simultaneously than into a single task or set of tasks executing sequentially.

In computers that implement multiple contexts within the CPU, how instructions are issued from the contexts varies markedly. Techniques include fixed rotation schemes, schemes that switch contexts when the currently executing context encounters a stall condition (such as cache miss), and schemes in which all contexts are able to issue instructions simultaneously, subject only to the availability of the necessary resources.

One family of computers is based on a series of instruction set architectures developed by ARM Ltd. of Cambridge/ England. This instruction set architecture family is known as the ARM ISA and has several versions and 5 variants. One feature of the ARM ISA is the use of coprocessors that execute instructions included in the normal instruction stream. Some standard coprocessors are defined for controlling and configuring the computer. A facility also exists for custom coprocessors that extend the capabilities of the architectures. A coprocessor has both its own state and its own instruction set. All or some of the state of a coprocessor might be part of the context dedicated to exclusive use by an executing program. Coprocessors are architecturally distinct in the ARM ISA, but may be implemented as part of the processor. Typically, one or more standard coprocessors used to configure and control the computer are implemented as part of the processor.

WO 99/21089 describes a system and method for performing computer processing operations in a data processing system including a multithreaded processor and thread switch logic. The multithreaded processor is capable of switching between two or more threads of instructions which can be independently executed. Each thread has a corresponding state in a thread state register depending on its execution status. The thread switch logic contains a thread switch control register to store the conditions upon which a thread switch will occur.

### DESCRIPTION OF DRAWINGS

Fig. 1 is a block diagram of a general-purpose computer that does not support hardware multithreading.
Fig. 2 is a block diagram of a general-purpose computer adapted to support hardware multithreading.
Fig. 3 is a block diagram of a general-purpose computer 25 adapted to support hardware multithreading in a manner different than shown in Fig. 2.
Fig. 4 is a block diagram of a scenario requiring serial and parallel work to be implemented on a multithreaded processor.
Fig. 5 is a block diagram of a producer-consumer parallel scenario that requires prevention of over-running or under-running of a shared data buffer implemented on a multithreaded processor.

Like reference symbols in the various drawings indicate like elements.

### DETAILED DESCRIPTION

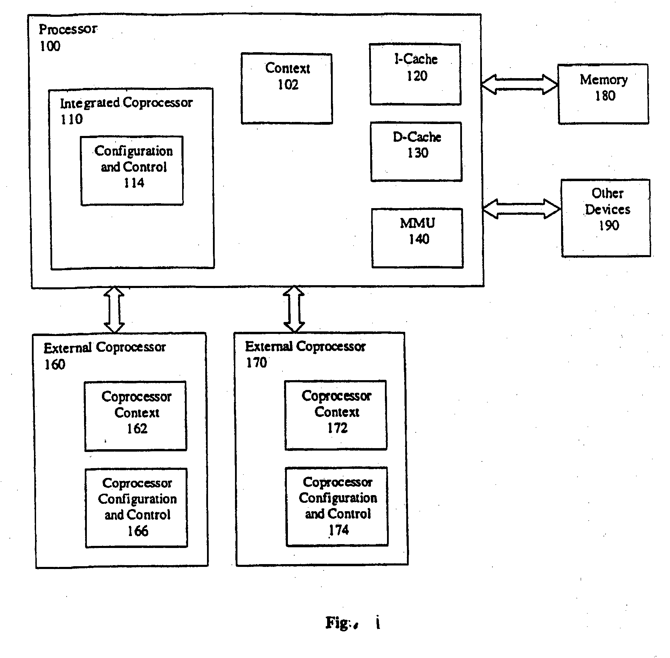

Fig. 1 illustrates a general-purpose microprocessor 100 that includes, among other elements, the state that makes up the execution context for a single thread (context) 102, an integrated coprocessor 110 that contains a configuration and control state 114, an instruction cache (Icache) 120, a data cache (Dcache) 130, and a memory management unit (MMU) 140. The microprocessor is connected to a memory 180, a coprocessor 160 that contains a coprocessor-specific state that is part of the execution context 162 and a configuration and control state 166 unique to coprocessor 160, a coprocessor 170 that contains a coprocessor-specific state that is part of execution context 172 and a configuration and control state 176 that is unique to coprocessor 170, and other devices 190 such as are typically found in a computer system. The Icache 120 maintains a series of instructions for execution by the microprocessor 100. In the ARM architecture, the Icache 120 also maintains a series of instructions for integrated coprocessor 110, coprocessor 160, and coprocessor 170.

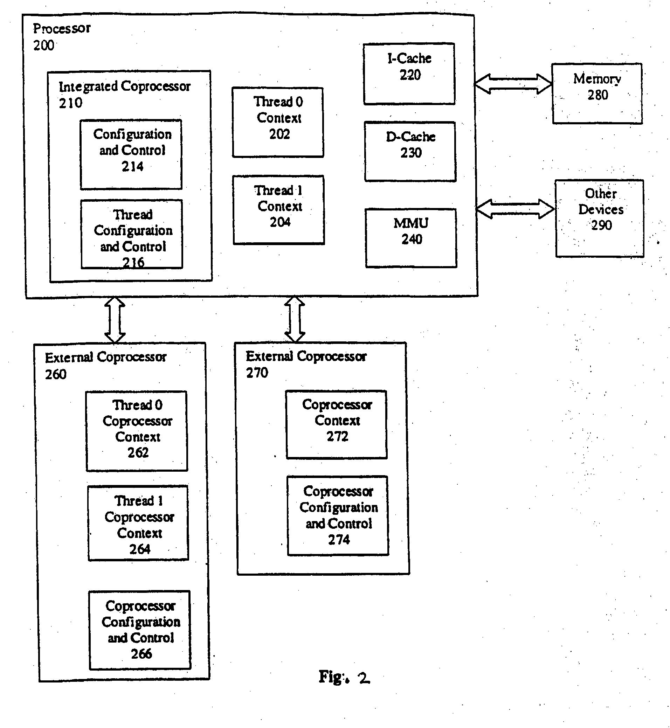

Fig. 2 illustrates the microprocessor of Fig. 1 modified to support hardware multi-threading. As in Fig. 1, the processor 200 contains an instruction cache (Icache) 220, a data cache (Dcache) 230, a memory management unit (MMU) 240 and an integrated coprocessor 210 that contains a configuration and control state 214. In addition, the processor 200 is connected to a coprocessor 260, and a coprocessor 270, memory 280, and other devices 290.

The processor 200 differs from the processor 100 by having two execution contexts: a Thread 0 context 202 and a Thread 1 context 204. Also, processor 200 adds thread configuration and control state and logic 216 to the integrated coprocessor 210, and permits configuration and control state 214 to have per-thread duplicates of some portions of the configuration and control state 114 of processor 100. Likewise, coprocessor 260 incorporates two coprocessor-specific contexts: Thread 0 coprocessor context 262 and Thread 1 coprocessor context 264. In addition, the configuration and control state 266 of coprocessor 260 may have per-thread duplicates of some portions of the configuration and control state 166 of coprocessor 160.

Although Fig. 2 shows an implementation with two contexts, the described techniques are not limited in this respect. Implementations may support any number of contexts. In addition, in some implementations, coprocessor 260 may be implemented as an integrated coprocessor. The described techniques may be applied to hardware using any scheme for issuing instructions from multiple contexts.

Note that the thread configuration and control state 216 may be in a different architectural coprocessor than the rest of the configuration and control state 214, regardless of whether the state and logic associated with states 214 and 216 are implemented in the same block of circuitry. By placing the thread configuration and control state 216 in an architecturally distinct coprocessor, the main processor architecture can be left unaltered from the point of view of executing programs, with the exception of the software that manages the threads. The functionality provided through thread configuration and control 216 may include, for example, starting, stopping and resuming all or individual threads; assigning priorities to individual threads; and allocating resources among the threads. Some functionality of the configuration and control state 114 incorporated into the configuration and control state 214 may need to be duplicated for each thread when each thread needs to have independent control of that functionality. To preserve architectural compatibility with the architecture of processor 100, the relevant independent states for each thread may all be mapped into the same locations and same registers as in processor 100, and the implementation may determine which thread's state is read or written by a particular instruction by determining which thread issued that instruction. Examples of aspects of the configuration and control state 114 that an implementation may duplicate on a per-thread basis and access via the mechanism described above include base pointers for memory mapping tables, software process identifiers, memory translation enable, and debugging feature enables.

In a particular implementation, Thread 0 context 202 and Thread 1 context 204 can each contain all of the context needed by the modes supported by the ARM architecture (e.g., User/Supervisor, FIQ, and IRQ), including the program counter, CPSR and SPSR. In an alternate implementation, Thread 1 context 204 might only contain the context needed to support the user mode of the ARM architecture. In such an alternate implementation, only one thread could be executing in any mode other than user mode at any particular time, and all user mode threads would be halted whenever any thread entered any mode other than user mode.

The Icache 220 contains instructions for both Thread 0 and Thread 1. Similarly, the Dcache 230 contains data for both Thread 0 and Thread 1, and the MMU 240 contains translation and permission information for both Thread 0 and Thread 1. As instructions are sequenced through the various implementation-dependent stages of their execution, the control logic of processor 200 maintains an association between each instruction fetched from the Icache 220 and the thread from which the instruction issued so that each instruction uses the appropriate context of context 202 or context 204, is granted the appropriate permissions and uses the proper address translations from MMU 240, and accesses and manipulates the appropriate data in Dcache 220, memory 280 and other devices 290. In one implementation, an address space identifier (ASID) is provided for each thread to indicate which address translations and permissions apply to each thread, with threads that are given the same ASID sharing the same set of address translations and permissions. Additionally, processor 200 and external coprocessor 260 ensure that instructions issued to coprocessor 260 use the proper contexts in coprocessor 260: either context 262 for instructions issued out of thread 0 or context 264 for instructions issued out of thread 1. Errors that result from the execution of a thread anywhere in the process of executing an instruction from that thread are reported to the thread that caused the error.

Coprocessor 270 has only one coprocessor-specific context 272 and may not have any state or logic designed to support hardware multi-threading. Accordingly, the threads must share coprocessor 270. In one approach to sharing, coprocessor 270 may be permanently allocated to one of the threads such that the other thread receives an error signal when it tries to use coprocessor 270. In another approach, coprocessor 270 may be dynamically assigned to one thread or the other by the operating system or real-time executive, with whichever thread not currently having permission to use the coprocessor 270 receiving an error signal when attempting to use the coprocessor. In yet another approach, coprocessor 270 may be used simultaneously by both threads, with the software being responsible for making sure that each thread does not interfere with the other thread's use of coprocessor 270, either by per-thread allocation of resources within coprocessor 270 or by software protocols that coordinate which thread can use which resource of coprocessor 270, and when they can use them. Implementations may support any or all of these mechanisms.

A particular implementation manages access to coprocessors through a per-thread register that has a bit for each coprocessor in the system. Each thread accesses this register through the same address or as the same coprocessor register in the thread configuration and control state 216. The implementation ensures that each thread reads or writes only its own register. Software running on all the threads coordinates which thread has access to which coprocessors. For a coprocessor that supports as many contexts as the processor 200, every thread can set the bit indicating that it has access to that coprocessor. For a coprocessor that only has one context, only one thread should set the bit for that coprocessor, unless software protocols allow the coprocessor to be shared. When a thread attempts to use or access a coprocessor for which the relevant bit is not set in the thread's copy of the register, an error is signaled.

A thread may query its identity by reading one of the registers in the thread configuration and control state 216. The coprocessor 210 responds to the read by returning the thread ID of the requesting thread. A thread may also read one of the registers in the thread configuration and control state 216 to determine the number of hardware threads supported by the system. A thread may halt or pause its own execution by writing to a register in the thread configuration and control state 216, with a thread that has halted its own execution being referred to as a frozen thread. A thread may also force another thread out of the frozen state by writing to a register in the thread configuration and control state 216. A frozen thread may also be configured to exit the frozen state and resume execution on the occurrence of an event external to the thread, such as a timer or an I/O device interrupt.

In one implementation, in a processor 200 that supports n threads, control of the n threads may be provided through bits in a writable register that typically resides in thread configuration and control state 216. For the n threads that are supported, the bits are identified as F_{n-1...}F₀ and R_{n-1...}R₀. Bit Fₓ, when written '1', freezes thread x. Bit Rₓ, when written '1', transitions thread x to the running state. It is important to note that the writing of '1' to the appropriate bit of the register, rather than the content of that bit, controls whether the thread is running or frozen: Accordingly, writing a 0 to a bit of the register has no effect. This means multiple threads may use the register simultaneously or nearly simultaneously without concern for what other threads are doing.

In another implementation, the only mechanism provided for transitioning a thread into the frozen state is having the thread itself write to a coprocessor or memory-mapped register. All threads may do so by writing the same bit in the same register, and the implementation places the thread doing the writing, and no other thread, into the frozen state. In this implementation, the thread is transitioned out of the frozen state by an interrupt. In a similar implementation, a thread is placed in the frozen state by sending the thread a reset signal.

In one implementation, processor 200 only has one thread T₀ executing after processor 200 has been reset, and all other threads are frozen. Software running on this thread determines that it is the first thread and executes an initialization routine to bring the system to a state in which having multiple active threads is allowed. The software then unfreezes the other threads. The software on each other thread then checks the thread's Thread ID and from it determines that the thread was not the first thread to run, and, accordingly, does not reexecute the initialization routine. In this implementation, each thread begins execution at the same address when it first executes after reset, and, if the initialization software (the "boot code") is not aware that the processor 200 supports hardware multi-threading, the initialization software still executes correctly.

In another implementation, processor 200 starts all threads executing immediately upon coming out of reset, and the software running on each thread determines from the thread's Thread ID what portion of system initialization, if any, the thread should be carrying out. In this implementation, the initialization code must be aware that the processor 200 supports hardware multi-threading in order to execute correctly.

In another implementation, the processor 200 has only one thread T₀ executing after being reset, with all other threads frozen. Software running on this first thread, as part of initialization, changes the boot code or changes the location from which the boot code is fetched before unfreezing the other threads. In this implementation, only the initialization code run by the first thread needs to be aware of the hardware multi-threaded nature of the processor.

Implementation may selectively route external or internal interrupts to particular threads. This routing may be fixed by the implementation or may be programmable. In addition, one interrupt may be steered to more than one thread or to all threads. In an implementation of the ARM architecture in which each hardware context contains the complete state for all the ARM modes, multiple threads may handle independent interrupts simultaneously. In any case, if an interrupt is routed to a thread that is frozen and the sensing of that interrupt is enabled in that thread, that thread will be unfrozen.

A mechanism may be provided for a thread to generate an interrupt and for that interrupt to be routed to a particular thread. This allows threads to communicate with each other through interrupts. A thread may be allowed to send interrupts to itself. In addition, a mechanism may be provided to permit a thread to send an interrupt to all threads simultaneously.

A mechanism also may be provided for threads to reset other threads. This mechanism can either reset a thread and leave the thread frozen, reset a thread and allow the thread to start executing immediately, or allow the thread sending the reset command to choose which of these occurs.

A mechanism may be provided to allow a thread to detect whether the last reset the thread received was a system-wide reset as might occur when the system was first turned on, or an individual reset sent to that thread by itself or some other thread.

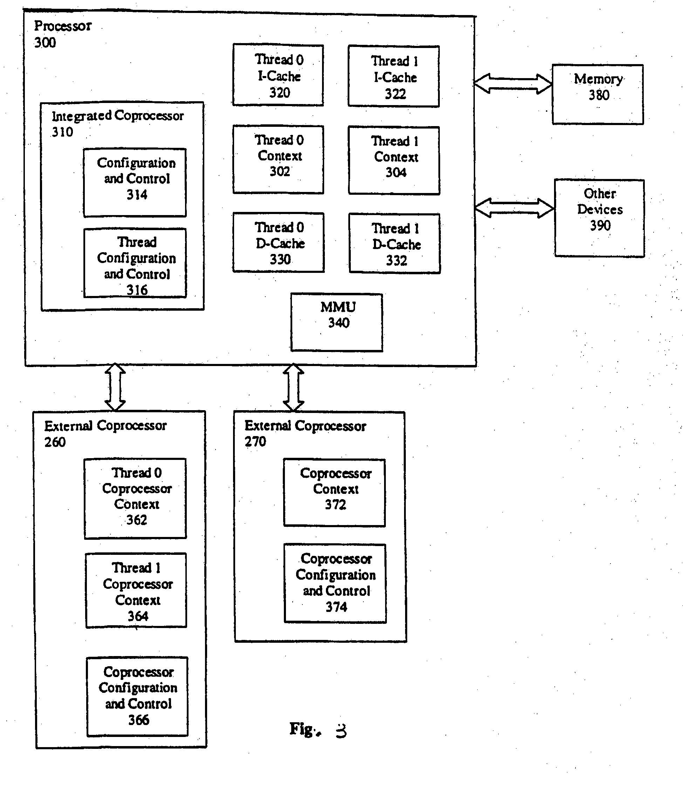

Fig. 3 shows an alternative implementation in which separate instruction caches and data caches are provided for each thread. The processor 300 includes an instruction cache (Icache) 320, 322, a data cache (Dcache) 330, 332, and a context 302, 304 for each of threads Thread0 and Thread1;
a memory management unit (MMU) 340; and an integrated coprocessor 310 that has a configuration and controlstate 314 and a thread configuration and control state 316. In addition, processor 300 is connected to memory 380 and other devices 390.

Like processor 200 of Fig. 2, processor 300 is connected to a coprocessor 260 and a coprocessor 270. As pointed out above, processor 300 differs from processor 200 by having separate Icaches and Dcaches for each thread (e.g., Thread 0 Icache 320, Thread 1 Icache 322, Thread 0 Dcache 330, and Thread 1 Dcache 332).

In the implementation of Fig. 3, the thread-specific state may be expanded beyond that needed by the processor 200 to include state information that independently configures and controls the per-thread instruction caches 320 and 322. The additional state information may be part of the configuration and control state 314, and may be made architecturally invisible through the per-thread register overloading technique previously described. The additional state information also may be part of the thread configuration and control state 316, in which case no effort needs to be made to make the information architecturally invisible. Elements of the configuration and control of the per-thread instruction and data caches also may be present in both the configuration and control state 314 and the thread configuration and control state 316.

Although the examples given in Figs. 2 and 3 only support two contexts, the described techniques support implementations with many more contexts than just two. In addition, the techniques support implementations with fewer or more coprocessors than shown in Figs. 2 and 3. The techniques also support implementations with more complex memory hierarchies.

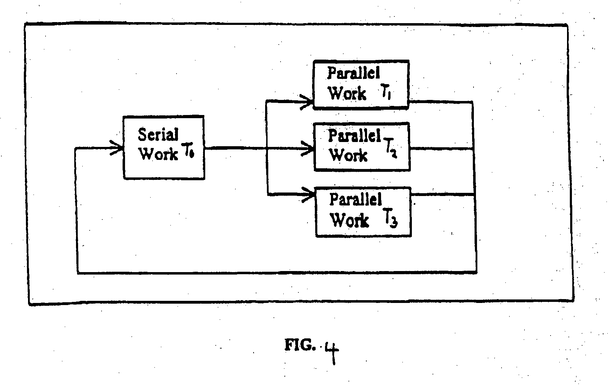

One example of a scenario using a processor supporting multithreading is in a barrier synchronization situation such as is shown in Fig. 4. The processor is augmented to include logic that waits for all threads, or a set of threads, to be in the frozen state, before a particular thread, or a set of threads, is transitioned to the running state. For this functionality, the set of threads may be specified in a variety of ways. For example, they may be specified through use of a register that contains a 1 bit for each thread in a set.

The register discussed above can handle this implementation. To accomplish this, the additional semantic that is included is that if all threads are frozen, then thread T₀ is automatically transitioned to running.

In the barrier synchronization example, initially the serial thread T₀ is running and the parallel threads T₁, T₂, T₃ are frozen by having appropriate values written to their bits of the register. The running serial thread T₀ executes tasks. Then, when the serial thread T₀ has completed its tasks, the serial thread T₀ freezes (either by freezing itself or by one of the parallel threads freezing T₀) and the parallel threads T₁, T₂, T₃ are activated (again, either by activating themselves or by being activated by T₀). The parallel threads T₁, T₂, T₃ then execute their assigned tasks and, upon completion of those tasks, the parallel threads T₁, T₂, T₃ return to a frozen state. When all the parallel threads T₁, T₂, T₃ are frozen, the serial thread T₀ is again activated. An example of the psuedocode to implement the barrier synchronization example is shown in Table 1:

**Table 1**

| |
|---|
| ```
// Assume Thread0 is the serial thread, Thread1, Thread2, Thread3 are the
 // parallel worker threads.
  // Assume for this example that initial state is: serial thread running,
 // parallel threads frozen.
 Thread0:
   // ---------- Insert serial work here ---------
   TCNTL = (1 << 16) \| 0xE // Freeze serial thread, Run parallel threads
   // We'll get here when parallel threads are done, because they will self-freeze and
   // the invention will automatically wake Thread0
   goto Thread0
 ThreadX; // Code for all parallel workers is similar to this
   // Won't start executing here until serial thread starts us.
   // ---------- Insert parallel work here ------------
   TCNTL = 1 << (my_thread_ID + 16) // Freeze self
   goto ThreadX
``` |

The psuedocode of Table 1 requires no explicit synchronization and the accuracy is easy to verify by inspection alone.

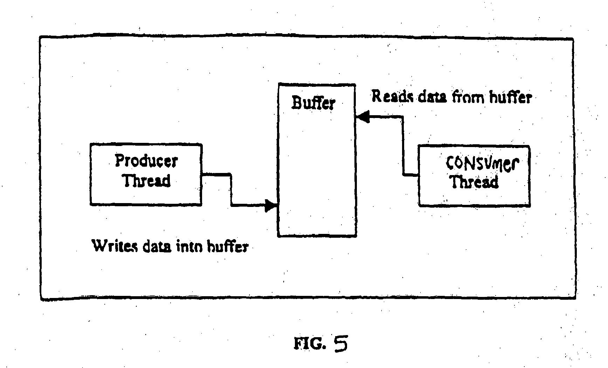

Fig. 5 shows another implementation that is an example of a producer-consumer scenario in which one or more threads produce data into a buffer and one or more other threads consume the data. The producer thread executes tasks that generate data that are stored in the buffer. The consumer thread executes tasks that use (consume) the data generated by the producer thread. The concern in the relationship of the two threads is preventing over-running or under-running of the shared data buffer by over-production or insufficient use. Thus, the two threads concurrently execute their respective tasks.

However, if the buffer location to which the producer thread is to write its data is the same as the buffer location from which the consumer thread is to read data, the consumer thread is frozen (e.g., by writing an appropriate value to the appropriate bits of the register) and the producer thread remains in an active state (appropriate bits may be written to the register bits for the producer thread to ensure that the producer thread is in an active state). Similarly, if the buffer data location from which the consumer thread is to read data is the next buffer data location in the buffer, the producer thread is frozen (e.g., by writing appropriate values to the appropriate bits of the register). Appropriate values may be written to the register bits for the consumer thread to ensure that the consumer thread is in an active state. An example of the psuedocode to implement the producer-consumer scenario is shown in Table 2:

**Table 2**

| |
|---|
| ```
  // Shared Data Buffer (N is the size of the buffer)
  // If producerPtr -- consumerPtr then the buffer is empty
  int buffer[N]
  int producerPtr = 0; // next location into which producer will write
  int consumerPtr = 0; // next location from which consumer will read
  // code for the consumer thread
  tmp = (1 << (16 + my_thread_ID)) \| (1 << producer_ID)
  consumer:
  while producerPtr == consumerPtr // Bluffer full?
          TCNTL = tmp // Freeze self, wake producer
      // ----------- Consume data at buffer[consumerPtr] ----------
      consumerPtr = (consumerPtr + 1) % N // Advance to next data item
      TCNTL = 1 << producer_ID // Make sure producer is awake
      goto consumer
  // code for producer thread
  tmp = (1 << (16 + my_thread_ID)) \| (1 << consumer_ID)
  producer:
      succ = (producerPtr + 1) % N
     while succ == consumerPtr // Freeze self, wake consumer
          TCNTL = tmp
      // ----------- Write date into buffer[succ] ----------
     producerPtr = succ
      TCNTH = 1 << consumer_ID // Advance to next data item
      goto producer // Make sure consumer is awake
``` |

The "while" loops in the consumer and producer codes rarely execute and are there to prevent an obscure race. Multiple consumer-producer pairs may run concurrently without affecting each other.

A number of implementations have been set forth and described in the drawings and description. Nevertheless, it will be understood that various modifications may be made. one or more threads may be dedicated to a particular task, or one or more threads may only wake on interrupt and only process an interrupt, and the memory block may be unified so that all tasks are part of a unified queue.

## Claims

1. A method of providing multithreaded computer processing, the method comprising:
dedicating a register to controlling running and freezing of multiple processing threads, the register being writeable by each of the processing threads;
causing a processing thread to run by writing, by another thread, a first value to one or more particular bits of the register; and
freezing the processing thread by writing, by said thread or another thread, a second value to one or more other particular bits of the register.

2. The method of claim 1 wherein the register is a coprocessor register.

3. The method of claim 1 wherein the first value is a "1".

4. The method of claim 3 wherein the second value is a "1".

5. The method of claim 4 wherein, if the first value or the second value is a "O," the processing thread continues to run or remains frozen.

6. The method of claim 1 wherein writing a value other than the second value to the one or more other particular bits of the register has no effect on whether the processing thread is frozen or running.

7. The method of claim 1, the method further comprising:
initializing a processor;
initializing n processing threads; causing a first processing thread to run;
freezing n-1 processing threads;
receiving a task for execution;
executing the task on the first processing thread; and if there is an additional task, receiving the additional task and concurrently executing the additional task.

8. The method of claim 7 wherein, if the additional task requires another thread to run, the method includes causing a second processing thread to run and concurrently executing the additional task on the second processing thread.

9. The method of claim 7 wherein the processor includes at least one resource accessible by each of the n processing threads.

10. The method of claim 9 wherein the processor includes at least one resource accessible by only one of the n processing threads.

11. The method of claim 1, further comprising freezing the processing thread and causing a second processing thread to run in response to an interrupt.

12. A system arranged and adapted to provide multithreaded computer processing, the system comprising:
a register dedicated to controlling running and freezing of multiple processing threads, the
register being writeable by each of the processing threads; and
a processor (200, 300) adapted to cause a processing thread to run in response to writing, by another thread, of a first value to one or more particular bits of the register, and to freeze the processing thread in response to writing, by said thread or another thread, of a second value to one or more other particular bits of the register.

13. The system of claim 12 further comprising a coprocessor (210, 310), wherein the register comprises a register of the coprocessor.

14. The system of claim 12 wherein the processor (200, 300) is adapted so that writing a value other than the second value to the one or more other particular bits of the register has no effect on whether the processing thread is frozen or running.

15. The system of claim 12 wherein the processor (200, 300) is adapted to:
initialize n processing threads;
cause a first processing thread to run;
freeze n-1 processing threads;
receive a task for execution; execute the task on the first processing thread; and
if there is an additional task, receive the additional task and concurrently execute the additional task.

16. The system of claim 15 wherein the processor (200, 300) is adapted to cause a second processing thread to run and to concurrently execute the additional task on the second processing thread when the additional task requires another thread to run.

17. The system of claim 15 wherein the processor (200, 300) includes at least one resource accessible by each of the n processing threads.

18. The system of claim 15 wherein the processor (200, 300) includes at least one resource accessible by only one of the n processing threads.

19. The system of claim 12, wherein the processor (200, 300) is adapted to freeze the processing thread and cause a second processing thread to run in response to an interrupt.

## Patentansprüche

1. Verfahren zum Bereitstellen einer Multithreading-Computemerarbeitung, wobei das Verfahren die folgenden Schritte aufweist:
Dedizieren eines Registers zum Steuern des Ausführens und Einfrieren von mehreren Verarbeitungsthreads, wobei das Register durch jeden der Verarbeitungsthreads beschreibbar ist;
Bewirken, dass ein Verarbeitungsthread ausgeführt wird, indem durch einen anderen Thread ein erster Wert in ein oder mehrere bestimmte Bits des Registers geschrieben wird; und
Einfrieren des Verarbeitungsthreads, indem durch den Thread oder einen anderen Thread ein zweiter Wert in ein oder mehrere andere bestimmte Bits des Registers geschrieben wird.

2. Verfahren nach Anspruch 1, wobei das Register ein Coprozessor-Register ist.

3. Verfahren nach Anspruch 1, wobei der erste Wert eine "1" ist.

4. Verfahren nach Anspruch 3, wobei der zweite Wert eine "1" ist.

5. Verfahren nach Anspruch 4, wobei, wenn der erste Wert oder der zweite Wert eine "0" ist, der Verarbeitungsthread weiter ausgeführt wird oder eingefroren bleibt.

6. Verfahren nach Anspruch 1, wobei das Schreiben eines anderen Werts als den zweiten Wert in das eine oder die mehreren anderen bestimmten Bits des Registers keine Auswirkung darauf hat, ob der Verarbeitungsthread eingefroren oder ausgeführt wird.

7. Verfahren nach Anspruch 1, wobei das Verfahren ferner aufweist:
Initialisieren eines Prozessors;
Initialisieren von n Verarbeitungsthreads;
Bewirken, dass ein erster Verarbeitungsthread ausgeführt wird;
Einfrieren von n-1 Verarbeitungsthreads;
Empfangen eines Tasks zur Ausführung;
Ausführen des Tasks auf dem ersten Verarbeitungsthread; und
wenn es einen zusätzlichen Task gibt, Empfangen des zusätzlichen Tasks und gleichzeitiges Ausführen des zusätzlichen Tasks.

8. Verfahren nach Anspruch 7, wobei, wenn es der zusätzliche Task erfordert, dass ein anderer Thread ausgeführt wird, das Verfahren das Bewirken aufweist, dass ein zweiter Verarbeitungsthread ausgeführt wird, und gleichzeitiges Ausführen des zusätzlichen Tasks auf dem zweiten Verarbeitungsthread.

9. Verfahren nach Anspruch 7, wobei der Prozessor mindestens eine Ressource aufweist, die durch jeden der n Verarbeitungsthreads zugänglich ist.

10. Verfahren nach Anspruch 9, wobei der Prozessor mindestens eine Ressource aufweist, die nur durch einen der n Verarbeitungsthreads zugänglich ist.

11. Verfahren nach Anspruch 1, das ferner als Reaktion auf eine Unterbrechung das Einfrieren des Verarbeitungsthreads und das Bewirken aufweist, dass ein zweiter Verarbeitungsthread ausgeführt wird.

12. System, das eingerichtet und angepasst ist, eine Multithreading-Computerverarbeitung bereitzustellen, wobei das System aufweist:
ein Register, das zum Steuern des Ausführens und Einfrierens von mehreren Verarbeitungsthreads dediziert ist, wobei das Register durch jeden der Verarbeitungsthreads beschreibbar ist; und
einen Prozessor (200, 300), der angepasst ist, zu bewirken, dass als Reaktion darauf, dass durch einen anderen Thread ein erster Wert in ein oder mehrere bestimmte Bits des Registers geschrieben wird, ein Verarbeitungsthread ausgeführt wird und als Reaktion darauf, dass durch den Thread oder einen anderen Thread ein zweiter Wert in ein oder mehrere andere bestimmte Bits des Registers geschrieben wird, der Verarbeitungsthread eingefroren wird.

13. System nach Anspruch 12 das ferner einen Coprozessor (210, 310) aufweist, wobei das Register ein Register des Coprozessors aufweist.

14. System nach Anspruch 12, wobei der Prozessor (200, 300) so angepasst ist, dass das Schreiben eines anderen Werts als des zweiten Werts in das eine oder die mehreren anderen bestimmten Bits des Registers keine Auswirkung darauf hat, ob der Verarbeitungsthread eingefroren oder ausgeführt wird.

15. System nach Anspruch 12, wobei der Prozessor (200, 300) angepasst ist:
n Verarbeitungsthreads zu initialisieren;
zu bewirken, dass ein erster Verarbeitungsthread ausgeführt wird;
n-1 Verarbeitungsthreads einzufrieren;
einen Task zur Ausführung zu empfangen; den Task auf dem ersten Verarbeitungsthread auszuführen; und
wenn es einen zusätzlichen Task gibt, den zusätzlichen Task zu empfangen und gleichzeitig den zusätzlichen Task auszuführen.

16. System nach Anspruch 15, wobei der Prozessor (200, 300) angepasst ist, zu bewirken, dass ein zweiter Verarbeitungsthread ausgeführt wird, und gleichzeitig den zusätzlichen Task auf dem zweiten Verarbeitungsthread auszuführen, wenn es der zusätzliche Task erfordert, dass ein anderer Thread ausgeführt wird.

17. System nach Anspruch 15, wobei der Prozessor (200, 300) mindestens eine Ressource aufweist, die nur durch einen der n Verarbeitungsthreads zugänglich ist.

18. System nach Anspruch 15, wobei der Prozessor (200, 300) mindestens eine Ressource aufweist, die nur durch einen der n Verarbeitungsthreads zugänglich ist.

19. System nach Anspruch 12, wobei der Prozessor (200, 300) angepasst ist, als Reaktion auf eine Unterbrechung den Verarbeitungsthread einzufrieren und zu bewirken, dass ein zweiter Verarbeitungsthread ausgeführt wird.

## Revendications

1. Procédé pour assurer un traitement informatique en multithread, le procédé comprenant les étapes consistant à :
dédier un registre à la commande de l'exécution et du blocage de threads de traitement multiples, le registre étant inscriptible par chacun des threads de traitement ;
faire s'exécuter un thread de traitement par écriture, par un autre thread, d'une première valeur dans un ou plusieurs bits particuliers du registre ; et
bloquer le thread de traitement par écriture, par ledit thread ou un autre thread, d'une deuxième valeur dans un ou plusieurs autres bits particuliers du registre.

2. Procédé selon la revendication 1, dans lequel le registre est un registre de coprocesseur.

3. Procédé selon la revendication 1, dans lequel la première valeur est un "1".

4. Procédé selon la revendication 3, dans lequel la deuxième valeur est un "1".

5. Procédé selon la revendication 4, dans lequel, si la première valeur ou la deuxième valeur est un "0", le thread de traitement continue de s'exécuter ou reste bloqué.

6. Procédé selon la revendication 1, dans lequel l'écriture d'une valeur autre que la deuxième valeur dans le ou les autres bits particuliers du registre n'a aucun effet sur le fait que le thread de traitement soit bloqué ou s'exécute.

7. Procédé selon la revendication 1, le procédé comprenant en outre les étapes consistant à :
initialiser un processeur ;
initialiser n threads de traitement ;
faire s'exécuter un premier thread de traitement ;
bloquer n-1 threads de traitement ;
recevoir une tâche à exécuter ;
exécuter la tâche sur le premier thread de traitement ; et
s'il existe une tâche supplémentaire, recevoir la tâche supplémentaire et exécuter en simultané la tâche supplémentaire.

8. Procédé selon la revendication 7, comprenant, si la tâche supplémentaire exige l'exécution d'un autre thread, l'étape consistant à faire s'exécuter un deuxième thread de traitement et exécuter en simultané la tâche supplémentaire sur le deuxième thread de traitement.

9. Procédé selon la revendication 7, dans lequel le processeur comporte au moins une ressource accessible par chacun des n threads de traitement.

10. Procédé selon la revendication 9, dans lequel le processeur comporte au moins une ressource accessible par un seul des n threads de traitement.

11. Procédé selon la revendication 1, comprenant en outre l'étape consistant à bloquer le thread de traitement et faire s'exécuter un deuxième thread de traitement en réponse à une interruption.

12. Système agencé et conçu pour assurer un traitement informatique en multithread, le système comprenant :
un registre dédié à la commande de l'exécution et du blocage de threads de traitement multiples, le registre étant inscriptible par chacun des threads de traitement ; et
un processeur (200, 300) conçu pour faire s'exécuter un thread de traitement en réponse à l'écriture, par un autre thread, d'une première valeur dans un ou plusieurs bits particuliers du registre, et pour bloquer le thread de traitement en réponse à l'écriture, par ledit thread ou un autre thread, d'une deuxième valeur dans un ou plusieurs autres bits particuliers du registre.

13. Système selon la revendication 12, comprenant en outre un coprocesseur (210, 310), dans lequel le registre comprend un registre du coprocesseur.

14. Système selon la revendication 12, dans lequel le processeur (200, 300) est conçu de telle sorte que l'écriture d'une valeur autre que la deuxième valeur dans le ou les autres bits particuliers du registre n'a aucun effet sur le fait que le thread de traitement soit bloqué ou s'exécute.

15. Système selon la revendication 12, dans lequel le processeur (200, 300) est conçu pour :
initialiser n threads de traitement ;
faire s'exécuter un premier thread de traitement ;
bloquer n-1 threads de traitement ;
recevoir une tâche à exécuter ;
exécuter la tâche sur le premier thread de traitement ; et
s'il existe une tâche supplémentaire, recevoir la tâche supplémentaire et exécuter en simultané la tâche supplémentaire.

16. Système selon la revendication 15, dans lequel le processeur (200, 300) est conçu pour faire s'exécuter un deuxième thread de traitement et exécuter en simultané la tâche supplémentaire sur le deuxième thread de traitement si la tâche supplémentaire exige l'exécution d'un autre thread.

17. Système selon la revendication 15, dans lequel le processeur (200, 300) comporte au moins une ressource accessible par chacun des n threads de traitement.

18. Système selon la revendication 15, dans lequel le processeur (200, 300) comporte au moins une ressource accessible par un seul des n threads de traitement.

19. Système selon la revendication 12, dans lequel le processeur (200, 300) est conçu pour bloquer le thread de traitement et faire s'exécuter un deuxième thread de traitement en réponse à une interruption.
